# EUROPÄISCHE PATENTANMELDUNG

(11) **EP 3 404 789 A1**
(43) Veröffentlichungstag der Anmeldung: **21.11.2018**
(21) Anmeldenummer: 18000443.4
(22) Anmeldetag: 11.05.2018
(51) Int. Cl.: H02G 3/22

(54) **LEITUNGSDURCHFÜHRUNG UND LEITUNGSDURCHFÜHRUNGSMODUL EINER SOLCHEN LEITUNGSDURCHFÜHRUNG**

(30) Priorität: 16.05.2017 DE 202017002603 U
(71) Anmelder: Aetec OOO, 115054 Moskau (RU)
(72) Erfinder: Wegscheider, Andrea, D-71549 Auenwald (DE); Rissel, Alexander, 74740 Adelsheim (DE)
(74) Vertreter: Lichti - Patentanwälte Partnerschaft mbB

(57) **Zusammenfassung**

Es wird eine Leitungsdurchführung mit einem Grundrahmen und mit wenigstens einem Leitungsdurchführungsmodul vorgeschlagen, welches mit einer oder mehreren Durchgangsöffnung(en) für eine jeweilige Leitung versehenen ist. Die Außenabmessungen der Leitungsdurchführungsmodule sind an den Innenquerschnitt des Grundrahmens angepasst, so dass die Leitungsdurchführungsmodule im Innenquerschnitt des Grundrahmens anordbar sind. An dem Grundrahmen ist ferner wenigstens ein Halteteil befestigt, mittels welchem die Leitungsdurchführungsmodule unverlierbar in dem Grundrahmen festlegbar sind. Die Erfindung sieht vor, dass das wenigstens eine an dem Grundrahmen befestigte Halteteil zwischen einer Halteposition, in welcher es die Leitungsdurchführungsmodule unverlierbar in dem Grundrahmen festlegt, und einer Freigabeposition, in welcher die Leitungsdurchführungsmodule dem Grundrahmen entnehmbar und in den Grundrahmen einführbar sind, hin und her bewegbar, beispielsweise schwenkbar, ist. Die Erfindung betrifft ferner ein Leitungsdurchführungsmodul für eine solche Leitungsdurchführung.

## Beschreibung

Die Erfindung betrifft eine Leitungsdurchführung mit einem Grundrahmen und mit wenigstens einem, mit einer oder mehreren Durchgangsöffnung(en) für eine jeweilige Leitung versehenen Leitungsdurchführungsmodul, dessen Außenabmessungen an den Innenquerschnitt des Grundrahmens angepasst und welches im Innenquerschnitt des Grundrahmens anordbar ist, und mit wenigstens einem, an dem Grundrahmen befestigbaren Halteteil, mittels welchem das Leitungsdurchführungsmodul unverlierbar in dem Grundrahmen festlegbar ist. Die Erfindung bezieht sich ferner auf ein Leitungsdurchführungsmodul mit einer oder mehreren Durchgangsöffnung(en) für eine jeweilige Leitung, welches insbesondere zur Anordnung in einem Grundrahmen einer Leitungsdurchführung der vorgenannten Art geeignet ist.

Solche Leitungsdurchführungen sind in verschiedenartigen Ausgestaltungen bekannt und dienen zur Durchführung von Leitungen, wie insbesondere Kabeln, durch Wanddurchbrüche hindurch, wobei es sich bei den Wanddurchbrüchen um Öffnungen in Gebäudewandungen oder insbesondere auch in Wandungen von Gehäusen, wie Schaltschränken, elektrische und elektronischen Geräten Kraftfahrzeugen und dergleichen handeln kann. Dabei ist es häufig, wenngleich nicht notwendigerweise, erwünscht, die Leitungen nicht nur durch den Wanddurchbruch hindurchzuführen, sondern mittels der Leitungsdurchführung zugleich für eine Abdichtung des Durchbruchs zu sorgen, um ein Eindringen von Schmutz und Feuchtigkeit zu verhindern.

Gattungsgemäße Leitungsdurchführungen weisen zu diesem Zweck oftmals einen nach Art eines Gehäuses ausgestalteten, im Wesentlichen formstabilen Grundrahmen auf, welcher am Umfang des Wanddurchbruchs festgelegt werden kann und eine Mehrzahl an Leitungsdurchführungsmodule aufnimmt, welche auch als "Tüllen" bezeichnet werden. Die Leitungsdurchführungsmodule sind mit einer Durchgangsöffnung zur Aufnahme einer jeweiligen Leitung versehen und können insbesondere aus Elastomermaterialien gefertigt sein, um für die gewünschte Dichtigkeit zu sorgen. Die Leitungsdurchführungsmodule sind ferner oftmals mit einem ihre Durchgangöffnung mit ihrem Außenumfang verbindenden Schlitz ausgestattet, um sie auf einfache Weise mit einer Leitung bestücken zu können, ohne diese durch ihre Durchgangsöffnung hindurchfädeln zu müssen. Der Grundrahmen der Leitungsdurchführung deckt diesen Schlitz randseitig ab, so dass die einzelnen Kabel, Schläuche oder andersartigen Leitungen nicht Gefahr laufen, unzeitig aus ihrem jeweiligen Leitungsdurchführungsmodul herausgezogen zu werden. Die Außenabmessungen der Leitungsdurchführungsmodule sind dabei an den Innenquerschnitt des sie aufnehmenden Grundrahmens angepasst, wobei ihre Länge und/oder Breite beispielsweise etwa einem Innendurchmesser des Grundrahmens oder einem Teiler hiervon entspricht, um sie dicht an dicht in dem Grundrahmen positionieren zu können. Sofern die Leitungsdurchführungsmodule aus elastomeren Materialien gefertigt sind, können sie selbstverständlich auch eine gegenüber einem Innendurchmesser des Grundrahmens bzw. einem Teiler hiervon geringfügig größere Länge und/oder Breite besitzen, um sie unter leichter Pressung in dem Grundrahmen aufnehmen zu können, so dass infolge des Druckes, welcher durch den Grundrahmen auf die Leitungsdurchführungsmodule ausgeübt wird, eine hohe Abdichtung sichergestellt wird, indem sich die Durchgangsöffnung(en) der Leitungsdurchführungsmodule vollumfänglich an die jeweilige, sie durchsetzende Leitung anlegen.

Eine derartige Leitungsdurchführung ist beispielsweise aus der DE 20 2015 102 280 U1 bekannt, wobei der gehäuseartige Grundrahmen zur Befestigung an dem Wanddurchbruch mit einer an der entgegengesetzten Seite des Wanddurchbruchs angeordneten Halteplatte verschraubt wird. Der gehäuseartige Grundrahmen nimmt dabei einerseits die Leitungsdurchführungsmodule in seinem Innenquerschnitt auf, andererseits überdeckt er die dem Wanddurchbruch entgegengesetzte Stirnseite der Leitungsdurchführungsmodule um deren Außenumfang, um die Leitungsdurchführungsmodule unverlierbar in dem gehäuseartigen Grundrahmen zu halten, wenn letzterer an dem Wanddurchbruch montiert worden ist. Um für einen Austausch einzelner Leitungen zu sorgen, muss folglich die gesamte Leitungsdurchführung demontiert werden, indem der gehäuseartige Grundrahmen von der Halteplatte gelöst wird, einzelne Leitungsdurchführungsmodule entnommen und mit neuen Leitungen bestückt werden, woraufhin die mit den Leitungen bestückten Leitungsdurchführungsmodule wieder in den Grundrahmen eingesetzt werden und letzterer mit der an der entgegengesetzten Seite des Wanddurchbruchs in Position gehaltenen Halteplatte verschraubt wird.

Die DE 102 25 046 A1 beschreibt eine zweiteilige Leitungsdurchführung, welche einerseits einen mit "Kabeldurchführungsleiste" bezeichneten Grundrahmen mit mehreren Aussparungen für Kabeltüllen bzw. Leitungsdurchführungsmodule, andererseits einen zum Aufbringen auf die Öffnung eines Wanddurchbruches vorgesehenen Tragrahmen mit einem Haltekörper in Form eines hakenartigen Vorsprungs und mit einem dem Haltekörper gegenüberliegenden, elastisch verformbaren Rastkörper umfasst, um den Grundrahmen an dem Tragrahmen lösbar zu verrasten. Während der Tragrahmen ausschließlich zur Befestigung des Grundrahmens an einer Wandung dient, dient der an dem Tragrahmen verrastbare Grundrahmen zur Aufnahme der Leitungsdurchführungsmodule in seinen Aussparungen nach Art einer Presspassung, so dass die die einzelnen Leitungen oder Kabel aufnehmenden Leitungsdurchführungsmodule insbesondere infolge einer Zugbelastung Gefahr laufen, aus den Aufnahmen des Grundrahmens herauszurutschen. Entsprechendes gilt für die aus der EP 2 784 591 B1 bekannte Leitungsdurchführung, welche gleichfalls einerseits einen Tragrahmen, andererseits einen Grundrahmen aufweist, welche lösbar, z.B. mittels Schrauben oder Spannelementen, aneinander befestigbar sind, wobei der Grundrahmen eine Durchgangsöffnung zur Aufnahme der Kabeldurchführungsmodule infolge Presspassung besitzt und der Tragrahmen zur Befestigung der Leitungsdurchführung an einer Wand dient.

Der Erfindung liegt die Aufgabe zugrunde, eine Leitungsdurchführung der eingangs genannten Art auf einfache und kostengünstige Weise dahingehend weiterzubilden, dass sie eine einfache Handhabbarkeit und eine hohe Flexibilität zur Anpassung an verschiedene Anwendungszwecke und unterschiedliche Leitungen einschließlich solcher Leitungen aufweist, welche an einem oder beiden ihrer Enden mit Anschlussstücken, wie Steckern, Buchsen und dergleichen, versehen sind.

Erfindungsgemäß wird diese Aufgabe bei eine Leitungsdurchführung der eingangs genannten Art dadurch gelöst, dass das wenigstens eine an dem Grundrahmen befestigte Halteteil zwischen einer Halteposition, in welcher es das Leitungsdurchführungsmodul unverlierbar in dem Grundrahmen festlegt, und wenigstens einer Freigabeposition, in welcher das Leitungsdurchführungsmodul dem Grundrahmen entnehmbar und in den Grundrahmen einführbar ist, hin und her bewegbar ist.

Die erfindungsgemäße Ausgestaltung ermöglicht eine sehr einfache Handhabung der Leitungsdurchführung in Bezug auf die Bestückung der Leitungsdurchführungsmodule mit Leitungen bzw. deren Austausch, wobei der Grundrahmen mit dem wenigstens einen Halteteil nicht demontiert, sondern das wenigstens eine Halteteil lediglich zwischen seiner Halteposition und seiner Freigabeposition hin und her bewegt werden muss, um die Leitungsdurchführungsmodule in den Grundrahmen einführen bzw. diesem entnehmen zu können. Während das wenigstens eine Halteteil in der Freigabeposition im Wesentlichen den gesamten Innenquerschnitt des Grundrahmens freigibt um die Leitungsdurchführungsmodule entnehmen bzw. einsetzen zu können, blockiert das wenigstens eine Halteteil in der Halteposition zumindest einen Teil des Innenquerschnittes des Grundrahmens, um die Leitungsdurchführungsmodule unverlierbar in dem Grundrahmen festzulegen. Das wenigstens eine Halteteil muss dabei nicht von dem Grundrahmen gelöst werden, so dass die Gefahr einer Beschädigung oder eines Verlustiggehens desselben minimiert wird. Gleichwohl bietet die erfindungsgemäße Ausgestaltung eine größtmögliche Packungsdichte an Leitungen, weil der gesamte Innenquerschnitt des Grundrahmens zur Aufnahme der die Leitungen tragenden Leitungsdurchführungsmodule zur Verfügung steht.

Der Grundrahmen und das oder die Leitungsdurchführungsmodul(e) besitzen dabei aneinander angepasste Abmessungen, wobei z.B. der Grundrahmen einen etwa rechteckförmigen Innenquerschnitt und das oder die Leitungsdurchführungsmodul(e) einen etwa rechteckigen Außenquerschnitt besitzen können, wobei der Außenquerschnitt des Leitungsdurchführungsmoduls oder der Außenquerschnitt einer Gruppe von Leitungsdurchführungsmodulen etwa dem Innenquerschnitt des Grundrahmens entspricht. Eine solche Gruppe von Leitungsdurchführungsmodulen muss dabei nicht notwendigerweise dieselben Außenabmessungen besitzen, sondern können selbstverständlich auch verschieden lange und/oder breite Leitungsdurchführungsmodule vorgesehen sein, deren Außenabmessungen beispielsweise gegeneinander abgestuft sein können (es weisen z.B. einige Leitungsdurchführungsmodule die halbe Breite, ein Drittel der Breite, ein Viertel der Breite etc. anderer Leitungsdurchführungsmodule auf), so dass die Summe der Längen und Breiten einer Gruppe an Leitungsdurchführungsmodulen etwa dem Innenquerschnitt des Grundrahmens entspricht. Indes sind freilich auch andere Formen der Grundrahmens und der Leitungsdurchführungsmodule denkbar, wobei der Grundrahmen z.B. einen runden, insbesondere einen etwa kreisrunden, Innenquerschnitt und das oder die Leitungsdurchführungsmodul(e) einen runden, insbesondere etwa kreisrunden, oder einen etwa kreissektor- bzw. kreisausschnittförmigen Außenquerschnitt besitzen können, so dass der Außenquerschnitt des Leitungsdurchführungsmoduls oder der Außenquerschnitt einer Gruppe von Leitungsdurchführungsmodulen wiederum etwa dem Innenquerschnitt des Grundrahmens entspricht. Eine solche Gruppe von Leitungsdurchführungsmodulen muss auch hier nicht notwendigerweise dieselben Außenabmessungen besitzen, sondern können selbstverständlich z.B. auch verschiedene, im Wesentlichen kreissektor- bzw. kreisausschnittförmigen Leitungsdurchführungsmodule vorgesehen sein, deren Radius etwa dem Radius des Innenquerschnittes des Grundrahmens entspricht und welche sich um einen verschieden großen Kreisbogen erstrecken, wobei die Länge des Kreisbogens, um welchen sich die Leitungsdurchführungsmodule erstrecken, wiederum beispielsweise gegeneinander abgestuft sein kann (es erstrecken sich z.B. einige Leitungsdurchführungsmodule um die Hälfte, ein Drittel, ein Viertel etc. der Länge des Kreisbogens anderer Leitungsdurchführungsmodule), so dass die Summe der Längen der Kreisbögen einer Gruppe an Leitungsdurchführungsmodulen etwa 360° entspricht.

Das wenigstens eine Halteteil kann vorteilhafterweise lösbar, insbesondere rastend, an dem Grundrahmen befestigt sein, so dass eine einfache Herstellung einerseits des Grundrahmens, andererseits des wenigstens einen Halteteils möglich ist, wonach das wenigstens eine Halteteil in einfacher Weise, vorzugsweise ohne Zuhilfenahme vom Werkzeugen, derart an dem Grundrahmen festgelegt werden kann, dass es zwischen seiner Halte- und seiner Freigabeposition hin und her bewegbar ist.

In vorteilhafter Ausgestaltung kann vorgesehen sein, dass an dem Grundrahmen wenigstens zwei, insbesondere genau zwei, Halteteile befestigt sind, welche jeweils zwischen einer Halteposition, in welcher sie das wenigstens eine Leitungsdurchführungsmodul unverlierbar in dem Grundrahmen festlegen, und wenigstens einer Freigabeposition, in welcher das Leitungsdurchführungsmodul dem Grundrahmen entnehmbar und in den Grundrahmen einführbar ist, hin und her bewegbar sind. Während grundsätzlich selbstverständlich auch ein einziges Halteteil vorgesehen sein kann, welches beispielsweise ebenfalls nach Art eines Rahmens ausgestaltet sein kann, bietet die Ausführungsform mit zwei (oder gegebenenfalls auch mehr) Halteteilen den Vorteil, dass bei der Bestückung oder beim Austausch von Leitungen diese nicht durch das Halteteil, sondern lediglich durch den Grundrahmen hindurch geführt werden müssen, während die Halteteile, welche in ihrer Halteposition wiederum eine Art Rahmen bilden können, nur zwischen ihrer Halteposition und ihrer Freigabeposition hin und her bewegt werden müssen. Im Falle einer solchen Ausgestaltung der Leitungsdurchführung mit zwei oder mehreren Halteteilen sind letztere aus fertigungstechnischen Gründen vorzugsweise identisch ausgebildet, was zusätzlich die Vormontage der Leitungsdurchführung - oder genauer: deren mit den Halteteilen ausgestattetem Grundrahmen - vereinfacht. Darüber hinaus können die Halteteile des Grundrahmens, sofern letzterer einen etwa rechteckigen bzw. quadratischen Querschnitt besitzt, vorteilhafterweise im Wesentlichen C- bzw. U-förmig oder im Wesentlichen L-förmig ausgestaltet sein; sofern der Grundrahmen einen etwa runden bzw. kreisrunden Querschnitt besitzt, können die Halteteile stattdessen vorteilhafterweise im Wesentlichen kreissektorförmig, insbesondere im Wesentlichen halbkreisförmig, ausgestaltet sein. Dies gibt einerseits die Möglichkeit, dass die beiden Halteteile in ihrer Halteposition einen mehr oder minder geschlossenen Halterahmen bilden, welche an die Form des Grundrahmens angepasst ist, während die Halteteile aus den oben erwähnten Gründen andererseits insbesondere identisch ausgestaltet sein können.

Das wenigstens eine Halteteil kann vorzugsweise zwischen der Halteposition und der wenigstens einen Freigabeposition schwenkbar an dem Grundrahmen angelenkt sein, um es bei einer einfachen dauerhaften Befestigung an dem Grundrahmen entlang einer Schwenkachse desselben in einfacher Weise zwischen seiner Halteposition und seiner Freigabeposition hin und her klappen zu können und zugleich für einen möglichst geringen Raumbedarf zu sorgen. Indes sei der Vollständigkeit halber darauf hingewiesen, dass grundsätzlich auch andere Bewegungen des bzw. der Halteteils bzw. Halteteile zwischen der Halte- und Freigabeposition denkbar sind, wie beispielsweise eine Verschiebung des wenigstens einen Halteteils entlang dem Grundrahmen zwischen einer Verriegelungsposition, in welcher es die Leitungsdurchführungsmodule unverlierbar in dem Grundrahmen hält, und einer Freigabeposition, in welcher es den Innenquerschnitt des Grundrahmens freilässt. Sofern der Grundrahmen zweckmäßigerweise einen im Wesentlichen rechteckigen oder quadratischen Querschnitt aufweist, kann das wenigstens eine Halteteil dabei vorzugsweise um eine sich im Wesentlichen parallel zu einer Seite des Grundrahmens erstreckenden Schwenkachse zwischen seiner Halteposition und seiner Freigabeposition schwenkbar sein. Weist der Grundrahmen einen runden, insbesondere etwa kreisrunden, Querschnitt auf, so kann stattdessen z.B. vorzugsweise vorgesehen sein, dass das wenigstens eine Halteteil um eine sich im Wesentlichen tangential zum Querschnitt des Grundrahmens erstreckende Schwenkachse schwenkbar ist.

Sind zwei Halteteile vorgesehen, so können diese vorzugsweise - im Falle eines etwa rechteckigen Grundrahmens - um je eine, sich jeweils im Wesentlichen parallel zu einer Seite des Grundrahmens erstreckende Schwenkachse oder - im Falle eines etwa runden Grundrahmens - um je eine, sich im Wesentlichen tangential zum Querschnitt des Grundrahmens erstreckende Schwenkachse schwenkbar sein, wobei insbesondere
- die Schwenkachsen der beiden Halteteile im Wesentlichen parallel zueinander angeordnet sind; und/oder
- die beiden Halteteile an einander entgegengesetzten Seiten des Grundrahmens angelenkt sind.
Allerdings ist es grundsätzlich auch denkbar, dass die Halteteile um eine gemeinsame Schwenkachse bzw. um miteinander fluchtende Schwenkachsen an dem Grundrahmen angelenkt sind.

Um für eine hohe Kompaktheit der Leitungsdurchführung zu sorgen, kann mit Vorteil vorgesehen sein, dass das wenigstens eine Halteteil in seiner Halteposition im Wesentlichen parallel zur Erstreckungsebene des Grundrahmens an diesem zur Anlage gelangt, um die Leitungsdurchführungsmodule im Innenquerschnitt des Grundrahmens unverlierbar zu halten. Alternativ oder insbesondere zusätzlich kann das wenigstens eine Halteteil in vorteilhafter Ausgestaltung ferner in seiner Halteposition an dem Grundrahmen verrastbar sein, so dass ein rein manuelles Festlegen und Lösen des Halteteils bzw. der Halteteile in der bzw. aus der Halteposition ohne Zuhilfenahme von Werkzeugen möglich ist. Darüber hinaus vermag das wenigstens eine, in der Halteposition an dem Grundrahmen verrastete Halteteil dabei vorzugsweise auch einen gewissen Andruck auf die im Innenquerschnitt des Grundrahmens aufgenommenen Leitungsdurchführungsmodule zu bewirken, um die Dichtigkeit zu erhöhen, so dass ein Eindringen von Schmutz, Staub oder Feuchtigkeit in einem mit einer erfindungsgemäßen Leitungsdurchführung versehenen Wanddurchbruch verhindert wird. Um für eine zuverlässige Verrastung des Halteteils bzw. der Halteteile in der Halteposition zu sorgen, kann ein jeweiliges Halteteil insbesondere wenigstens zwei, vorzugsweise genau zwei, Rastmittel aufweisen, welche mit hierzu komplementären Rastmitteln des Grundrahmens in Eingriff bringbar sind. Die Rastmittel, welche beispielsweise an den einer jeweiligen Schwenkachse eines jeweiligen Halteteils fernen, freien Enden des Halteteils angeordnet sein können, können dabei in beliebiger bekannter Weise ausgestaltet sein, wie beispielsweise in Form von Rastzungen des Grundrahmens oder des Halteteils, welche in Rastöffnungen des Halteteils oder des Grundrahmens lösbar in Eingriff bringbar sind.

In vorteilhafter Ausgestaltung kann ferner vorgesehen sein, dass der Grundrahmen einen als Widerlager für das wenigstens eine Leitungsdurchführungsmodul dienenden, innenseitigen Vorsprung aufweist, welcher sich zumindest um einen Teil seines Innenumfangs, insbesondere im Wesentlichen um seinen gesamten Innenumfang, erstreckt. Auf diese Weise können die Leitungsdurchführungsmodule in einfacher Weise an der dem innenseitigen Vorsprung entgegengesetzten Seite des Grundrahmens in dessen Innenquerschnitt eingeführt werden, bis sie an dem innenseitiges Vorsprung zur Anlage gelangen und hierdurch in dem Grundrahmen in der vorgesehenen Position gehalten werden. Der innenseitige Vorsprung des Grundrahmens ist hierbei zweckmäßigerweise im Bereich seiner dem wenigstens einen, in der Halteposition befindlichen Halteteil entgegenbesetzten Seite angeordnet, wobei der innenseitige Vorsprung insbesondere im Wesentlichen mit einer Grundseite des Grundrahmens fluchtet, so dass im Wesentlichen die gesamte Breite des Grundrahmens zur Aufnahme der Leitungsdurchführungsmodule zur Verfügung steht. Die Abmessungen des innenseitigen Vorsprungs des Grundrahmens sind zweckmäßigerweise derart an jene der Leitungsdurchführungsmodule angepasst, dass der innenseitige Vorsprung eine solche Breite aufweist, dass er den Querschnitt der Durchgangsöffnung(en) des wenigstens einen in dem Grundrahmen angeordneten Leitungsdurchführungsmoduls mehr oder minder gänzlich freilässt. Die Breite des innenseitigen Vorsprungs des Grundrahmens entspricht folglich höchstens oder genau etwa der Wandstärke eines mit der einen oder mehreren Durchgangsöffnung(en) zur Aufnahme der Leitungen versehenen Leitungsdurchführungsmoduls, wobei er aber hinreichend breit ist, um ein Widerlager für die Leitungsdurchführungsmodule zu bilden, so dass letztere durch den innenseitigen Vorsprung im Innenquerschnitt des Grundrahmens gehalten werden.

Aus den vorgenannten Gründen sollte auch das wenigstens eine Halteteil, insbesondere beide Halteteile, in der Halteposition um ein solches Maß in Richtung des Innenquerschnittes des Grundrahmens vorstehen, dass es bzw. sie den Querschnitt der Durchgangsöffnung(en) des wenigstens einen in dem Grundrahmen angeordneten Leitungsdurchführungsmoduls freilässt bzw. freilassen, aber das Leitungsdurchführungsmodul in der Halteposition gleichwohl unverlierbar in dem Grundrahmen halten. In ähnlicher Weise kann in vorteilhafter Ausgestaltung demnach vorgesehen sein, dass das wenigstens eine Halteteil, insbesondere beide Halteteile, in der Halteposition über zumindest einen Teil des Innenumfangs, insbesondere im Wesentlichen um den gesamten Innenumfang, des Grundrahmens in Richtung dessen Innenquerschnittes vorsteht bzw. vorstehen, um ein - weiteres - Widerlager für das wenigstens eine Leitungsdurchführungsmodul zu bilden, so dass die Leitungsdurchführungsmodule zwischen dem innenseitigen Vorsprung des Grundrahmens und dem den Grundrahmen nach innen übergreifenden Abschnitt des Halteteils bzw. der Halteteile in der Halteposition unverlierbar aufgenommen sind. Das bzw. die Halteteil(e) ist bzw. sind folglich vorzugsweise derart dimensioniert, dass sie in der Halteposition um ein solches Maß in den Innenquerschnitt des Grundrahmens hineinragen bzw. diesen von außen nach innen übergreifen, dass ihr Überstand in den Innenquerschnitt des Grundrahmens höchstens oder genau etwa der Wandstärke eines mit der einen oder mehreren Durchgangsöffnung(en) zur Aufnahme der Leitungen versehenen Leitungsdurchführungsmoduls entspricht, wobei der Überstand aber hinreichend groß ist, um ein Widerlager für die Leitungsdurchführungsmodule zu bilden, so dass letztere von dem bzw. den Halteteil(en) in der Halteposition im Innenquerschnitt des Grundrahmens gehalten werden. Der einerseits von dem innenseitigen Vorsprung des Grundrahmens, andererseits von dem Überstand des Halteteils bzw. der Halteteile in Richtung des Innenquerschnittes des Grundrahmens freigelassene Querschnitt kann dabei beispielsweise etwa identisch sein. Ferner kann die Dicke des Kabeldurchführungsmoduls bzw. der Kabeldurchführungsmodule vorzugsweise geringfügig, z.B. im einige Zehntel Millimeter, größer sein als der Abstand des innenseitigen Vorsprungs des Grundrahmens von den den Innenumfang des Grundrahmens nach innen übergreifenden Abschnitten der Halteteile in deren Halteposition, um für einen gewissen Andruck der Halteteile auf die Kabeldurchführungsmodule und folglich für eine hohe Dichtigkeit zu sorgen.

Gemäß einer Ausführungsvariante der Leitungsdurchführung kann vorgesehen sein, dass der Grundrahmen einstückig ausgebildet ist, wobei er insbesondere als vollumfänglich geschlossener Rahmen ausgebildet sein kann, um der Leitungsdurchführung eine hohe Formstabilität zu verleihen.

Stattdessen kann gemäß einer anderen Ausführungsvariante der Leitungsdurchführung vorgesehen sein, dass der Grundrahmen mehrteilig, insbesondere zweiteilig, ausgebildet ist, wobei die Grundrahmenteile unter Bildung des Grundrahmens aneinander befestigbar sind. Dies gibt die Möglichkeit, die erfindungsgemäße Leitungsdurchführung auch für solche Leitungen einzusetzen, welche an ihren Enden mit gegenüber den Innenabmessungen des Grundrahmens größeren Anschlüssen, wie z.B. Steckern, Buchsen und dergleichen, bestückt sind, ohne die Anschlüsse von den Leitungen bzw. Kabeln abtrennen zu müssen, indem erforderlichenfalls der Grundrahmen demontiert und nach Anordnung der Leitungen zwischen den Grundrahmenteilen wieder montiert werden kann. Aus fertigungstechnischen Gründen können die Grundrahmenteile in diesem Fall im Wesentlichen identisch ausgestaltet sein, was auch eine einfache Montage bzw. Demontage des Grundrahmens ermöglicht. Um für die oben erwähnte einfache Montage und Demontage des mehrteilig ausgestalteten Grundrahmens, insbesondere anlässlich des Austausches von Leitungen mit großen Anschlussstücken, zu sorgen, sind die Grundrahmenteile ferner vorzugsweise lösbar aneinander befestigbar, wobei sie beispielsweise miteinander verschraubbar sein können. Die zur Aufnahme der Schrauben vorgesehenen Bohrungen der Grundrahmenteile können sich hierbei mit Vorteil im Wesentlichen etwa parallel zur Erstreckungsebene des Grundrahmens bzw. der Grundrahmenteile erstrecken, um für eine hohe Kompaktheit zu sorgen. Zum Zwecke einer einfachen Montage und einer hohen Formstabilität des mehrteilig ausgestalteten Grundrahmens können die Grundrahmenteile überdies vorzugsweise zueinander komplementäre Zentriermittel, insbesondere in Form von in Zentrieröffnungen eingreifenden Zentrierzapfen, aufweisen, wobei selbstverständlich auch beliebige andere bekannte Zentriermittel denkbar sind, wie zueinander komplementäre Profile oder dergleichen. Schließlich können die Grundrahmenteile dabei vorzugsweise - ähnlich den Halteteilen - z.B. im Wesentlichen C- bzw. U-förmig oder L-förmig ausgestaltet sein, um einen etwa rechteckigen bzw. quadratischen Grundrahmen zu bilden, oder sie können z.B. auch im Wesentlichen kreisbogenförmig, insbesondere im Wesentlichen halbkreisförmig, ausgestaltet sein, um einen runden Grundrahmen zu bilden, so dass im montierten Zustand ein, insbesondere vollumfänglich geschlossener, Grundrahmen erhalten wird.

Um die Leitungsdurchführung auf einfache Weise an einem Wanddurchbruch - sei es am Wanddurchbruch eines Gebäudes, eines Schaltschranks oder sei es an einem beliebigen anderen Wanddurchbruch - zu befestigen, kann in vorteilhafter Ausführung vorgesehen sein, dass der Grundrahmen und/oder das wenigstens eine Halteteil ferner Befestigungsmittel zur, insbesondere lösbaren, Befestigung der Leitungsdurchführung an einem Wanddurchbruch aufweist bzw. aufweisen. Die Befestigungsmittel können nach Art von beliebigen bekannten Befestigungsmitteln ausgestaltet sein und beispielsweise Befestigungsflansche, Rastnasen und/oder Rastausnehmungen und dergleichen umfassen. Die Befestigungsmittel können ferner beispielsweise Durchgangsbohrungen umfassen, welche zur Aufnahme von Schrauben, Bolzen oder dergleichen dienen, wobei insbesondere sowohl der Grundrahmen als auch das wenigstens eine Halteteil Durchgangsbohrungen aufweisen, welche in der Halteposition des wenigstens einen Halteteils miteinander fluchten, so dass die fertig mit den Leitungsdurchführungsmodulen bestückte Leitungsdurchführung derart an einem Wanddurchbruch verschraubt werden kann, dass das bzw. die Halteteil(e) zugleich in ihrer Halteposition fixiert wird bzw. werden.

Im Übrigen sei an dieser Stelle darauf hingewiesen, dass der Grundrahmen zumindest an seiner zur Anlage gegen einen Wanddurchbruch vorgesehenen Seite mit einer oder mehreren Dichtung(en) versehen sein kann, wie es als solches aus dem Stand der Technik bekannt ist. Darüber hinaus kann bzw. können der Grundrahmen und/oder das wenigstens eine Halteteil grundsätzlich aus beliebigen Materialien einschließlich Metallen oder Metalllegierungen gefertigt sein, welche für ihre erforderliche Formstabilität zu sorgen vermögen, wobei sie aus fertigungstechnischen Gründen vorteilhafterweise aus Kunststoff, insbesondere in Form von Spritzgussteilen, gefertigt sein können. Die Leitungsdurchführungsmodule können vorzugsweise aus elastisch nachgiebigen Materialien, wie beispielsweise aus elastomeren Kunststoffmaterialien, gefertigt sein, wodurch eine hohe Abdichtung der hierdurch aufgenommenen Leitungen erzielt werden kann und insbesondere auch die eingangs angesprochene Dimensionierung der Leitungsdurchführungsmodule mit einem gewissen Übermaß gegenüber dem Innenquerschnitt des Grundrahmens und/oder gegenüber dem zwischen einem innenseitigen Vorsprung des Grundrahmens und dem wenigstens einen, in der Halteposition befindlichen Halteteil gebildeten Zwischenraum möglich ist.

Die Erfindung betrifft auch ein Leitungsdurchführungsmodul mit einer oder mehreren Durchgangsöffnung(en) für eine jeweilige Leitung, welches zur Anordnung in einem Grundrahmen einer Leitungsdurchführung, insbesondere im Innenquerschnitt eines Grundrahmens einer Leitungsdurchführung der vorbeschriebenen Art, geeignet ist. Das Leitungsdurchführungsmodul weist dabei erfindungsgemäß wenigstens einen, wenigstens einer Durchgangsöffnung desselben zugeordneten Verschlussstopfen auf, welcher lösbar in der Durchgangsöffnung anordbar ist, wobei der Verschlussstopfen mittels eines elastisch nachgiebigen Haltestegs mit dem Leitungsdurchführungsmodul verbunden ist. Auf diese Weise wird einerseits die Möglichkeit eröffnet, nicht benötigte Durchgangsöffnung des Leitungsdurchführungsmoduls mittels des Stopfens zu verschließen, dessen Außenquerschnitt zur Gewährleistung einer hohen Dichtigkeit je nach elastischer Nachgiebigkeit mit einem geringen Übermaß gegenüber dem Innenquerschnitt der ihm zugeordneten Durchgangsöffnung ausgestaltet sein kann. Andererseits sind die Verschlussstopfen mittels des sie mit dem Leitungsdurchführungsmodul verbindenden Haltestegs nicht nur unverlierbar an dem Leitungsdurchführungsmodul befestigt, sondern können die die Verschlussstopfen tragenden Haltestege insbesondere auch dazu genutzt werden, eine durch die Durchgangsöffnung eines Leitungsdurchführungsmodul hindurchgeführte Leitung, beispielsweise mittels Kabelbinder oder dergleichen, an dem Haltesteg und/oder an dem hieran angeordneten Verschlussstopfen zu befestigen, um für eine zusätzliche Zugentlastung der Leitung zu sorgen.

Sowohl der bzw. die Verschlussstopfen als auch der bzw. Haltesteg(e) sind vorzugsweise einstückig mit dem Leitungsdurchführungsmodul ausgebildet, wobei die Haltestege mit den Verschlussstopfen beispielsweise an das Leitungsdurchführungsmodul angeformt, z.B. angespitzt, angegossen oder dergleichen, sein können. Wie bereits angedeutet, können das Leitungsdurchführungsmodul, der Verschlussstopfen und der Haltesteg dabei aus den oben genannten Gründen vorzugsweise aus einem nachgiebig elastischen Elastomermaterial, wie insbesondere aus einem elastomeren Kunststoffmaterial, z.B. Gummi einschließlich beliebiger bekannter Kautschuke, wie Ethylen-Propylen-Dien-Kautschuk (EPDM) oder dergleichen, Silikon etc., gefertigt sein. Das bzw. die Leitungsdurchführungsmodul(e) kann bzw. können ferner außenumfangsseitig und/oder innenumfangsseitig an der bzw. den Durchgangsöffnung(en) mit einer reibungserhöhenden Oberflächenstruktur ausgestattet sein, wie beispielsweise in Form von Rippen, etwa runden oder mehreckigen Vertiefungen oder dergleichen, welche vorzugsweise gleichfalls zur Gewährleistung einer hohen Dichtigkeit gegen den Innenquerschnitt des Grundrahmens bzw. gegen eine durch die Durchgangsöffnung hindurchgeführte Leitung beizutragen vermögen.

Wie ebenfalls bereits angedeutet, weist ein jeweiliges Leitungsdurchführungsmodul ferner zweckmäßigerweise zu dem Innenquerschnitt des Grundrahmens der Leitungsdurchführung oder zu einem Bruchteil dieses Innenquerschnittes im Wesentlichen komplementäre Außenabmessungen auf, wobei es aus den bereits genannten Gründen mit einem demgegenüber geringen Übermaß, z.B. von einigen Zehntel Millimetern, ausgestaltet sein kann. Besitzt der Grundrahmen folglich einen z.B. etwa rechteckigen bzw. quadratischen Innenquerschnitt, so weist ein jeweiliges Leitungsdurchführungsmodul zweckmäßigerweise gleichfalls einen etwa rechteckigen bzw. quadratischen Außenquerschnitt auf; ist der Innenquerschnitt des Grundrahmens z.B. rund bzw. kreisrund, so weist ein jeweiliges Leitungsdurchführungsmodul zweckmäßigerweise einen im Wesentlichen runden bzw. kreisrunden oder kreissektor- bzw. kreisausschnittförmigen Außenquerschnitt nach Art eines "Kuchenstückes" auf.

Wie als solches aus dem Stand der Technik bekannt, kann ein jeweiliges Leitungsdurchführungsmodul selbstverständlich auch einen seine Durchgangsöffnung(en) mit seinem Außenquerschnitt verbindenden Schlitz aufweisen, um die Durchgangsöffnung in einfacher Weise mit Leitungen bestücken zu können, ohne diese durch eine jeweilige Durchgangsöffnung hindurchfädeln zu müssen.

Bei einer mit derartigen Leitungsdurchführungsmodulen versehenen Leitungsdurchführung kann ferner eine Mehrzahl an Leitungsdurchführungsmodulen, insbesondere mit Durchgangsöffnungen mit verschiedenen Querschnitten, vorgesehen sein, welche gemeinsam in dem Innenquerschnitt des Grundrahmens anordbar sind. Folglich können an verschiedene Leitungen angepasste Leitungsdurchführungsmodule mit unterschiedlich großen Durchgangsöffnungen modulartig in dem Innenquerschnitt des Grundrahmens der Leitungsdurchführung angeordnet und insbesondere auch gegeneinander ausgetauscht werden, falls bereits verlegte Leitungen gegen neue Leitungen mit einem demgegenüber unterschiedlichen Durchmesser ersetzt werden sollen. Die Außenabmessungen der Leitungsdurchführungsmodule sind dabei an den Innenquerschnitt des Grundrahmens bzw. an einen oder verschiedene Bruchteile dieses Innenquerschnittes angepasst, wie es weiter oben im Einzelnen erläutert ist.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine schematische perspektivische Ansicht einer Ausführungsform einer erfindungsgemäßen Leitungsdurchführung mit einem Grundrahmen mit zwei hieran angelenkten Halteteilen in deren Halteposition sowie mit einer Mehrzahl an im Innenquerschnitt des Grundrahmens aufgenommenen Leitungsdurchführungsmodulen;
- Fig. 2: eine schematische Seitenansicht der Leitungsdurchführung gemäß Fig. 1 in Richtung deren in Fig. 1 vorderen Stirnseite;
- Fig. 3: eine schematische Draufsicht auf die Leitungsdurchführung gemäß Fig. 1 und 2 von oben;
- Fig. 4: eine schematische Querschnittsansicht der Leitungsdurchführung gemäß Fig. 1 bis 3 entlang der Schnittebene IV-IV gemäß Fig. 3;
- Fig. 5: eine schematische perspektivische Detailansicht des Grundrahmens der Leitungsdurchführung gemäß Fig. 1 bis 4;
- Fig. 6: eine schematische Seitenansicht des Grundrahmens gemäß Fig. 5 in Richtung dessen in Fig. 5 vorderen Stirnseite;
- Fig. 7: eine schematische Draufsicht auf den Grundrahmen gemäß Fig. 6 und 7 von oben;
- Fig. 8: eine schematische Querschnittsansicht des Grundrahmens gemäß Fig. 5 bis 7 entlang der Schnittebene VIII-VIII gemäß Fig. 7;
- Fig. 9: eine schematische perspektivische Detailansicht eines der Halteteile der Leitungsdurchführung gemäß Fig. 1 bis 4;
- Fig. 10: eine schematische Seitenansicht des Halteteils gemäß Fig. 9 in Richtung dessen in Fig. 9 vorderen Stirnseite;
- Fig. 11: eine schematische Draufsicht auf das Halteteil gemäß Fig. 9 und 10 von oben;
- Fig. 12: eine schematische Seitenansicht des Halteteils gemäß Fig. 9 bis 11 in Richtung dessen in Fig. 9 hinteren Längsseite;
- Fig. 13: eine schematische Querschnittsansicht des Halteteils gemäß Fig. 9 bis 12 entlang der Schnittebene XIII-XIII gemäß Fig. 11;
- Fig. 14: eine schematische perspektivische Detailansicht der Mehrzahl an Leitungsdurchführungsmodulen der Leitungsdurchführung gemäß Fig. 1 bis 4;
- Fig. 15: eine schematische Seitenansicht der Leitungsdurchführungsmodule gemäß Fig. 14 in Richtung deren in Fig. 14 vorderen Stirnseite;
- Fig. 16: eine schematische Draufsicht auf die Leitungsdurchführungsmodule gemäß Fig. 14 und 15 von oben;
- Fig. 17: eine schematische Querschnittsansicht der Leitungsdurchführungsmodule gemäß Fig. 14 bis 16 entlang der Schnittebene XVII-XVII gemäß Fig. 16;
- Fig. 18: eine schematische perspektivische Detailansicht eines Grundrahmenteils einer gegenüber der Ausführungsform des Grundrahmens gemäß Fig. 5 bis 8 alternativen Ausführungsform eines zweiteilig ausgestalteten Grundrahmens;
- Fig. 19: eine schematische Seitenansicht des Grundrahmenteils gemäß Fig. 18 in Richtung dessen in Fig. 18 vorderen Stirnseite;
- Fig. 20: eine schematische Draufsicht auf das Grundrahmenteil gemäß Fig. 18 und 19 von oben;
- Fig. 21: eine schematische Querschnittsansicht des Grundrahmenteils gemäß Fig. 18 bis 10 entlang der Schnittebene XXI-XXI gemäß Fig. 20;
- Fig. 22: eine schematische perspektivische Ansicht einer weiteren Ausführungsform einer erfindungsgemäßen Leitungsdurchführung mit einem Grundrahmen mit zwei hieran angelenkten Halteteilen, von welchen sich das eine in seiner Halteposition und das andere in seiner Freigabeposition befindet, sowie mit einer Mehrzahl an im Innenquerschnitt des Grundrahmens aufgenommenen Leitungsdurchführungsmodulen;
- Fig. 23: eine schematische Seitenansicht der Leitungsdurchführung gemäß Fig. 22 in Richtung deren in Fig. 22 vorderen Stirnseite;
- Fig. 24: eine schematische Draufsicht auf die Leitungsdurchführung gemäß Fig. 22 und 23 von oben;
- Fig. 25: eine schematische Querschnittsansicht der Leitungsdurchführung gemäß Fig. 22 bis 24 entlang der Schnittebene XXV-XXV gemäß Fig. 24;
- Fig. 26: eine der Fig. 15 entsprechende schematische Seitenansicht einer weiteren Ausführungsform eines Leitungsdurchführungsmoduls;
- Fig. 27: eine der Fig. 16 entsprechende schematische Draufsicht auf das Leitungsdurchführungsmodul gemäß Fig. 26;
- Fig. 28: eine schematische Seitenansicht des Leitungsdurchführungsmoduls gemäß Fig. 26 und 27 in Richtung des Pfeils XXVIII der Fig. 26 betrachtet; und
- Fig. 29: eine der Fig. 17 entsprechende schematische Querschnittsansicht des Leitungsdurchführungsmoduls gemäß Fig. 26 bis 28.

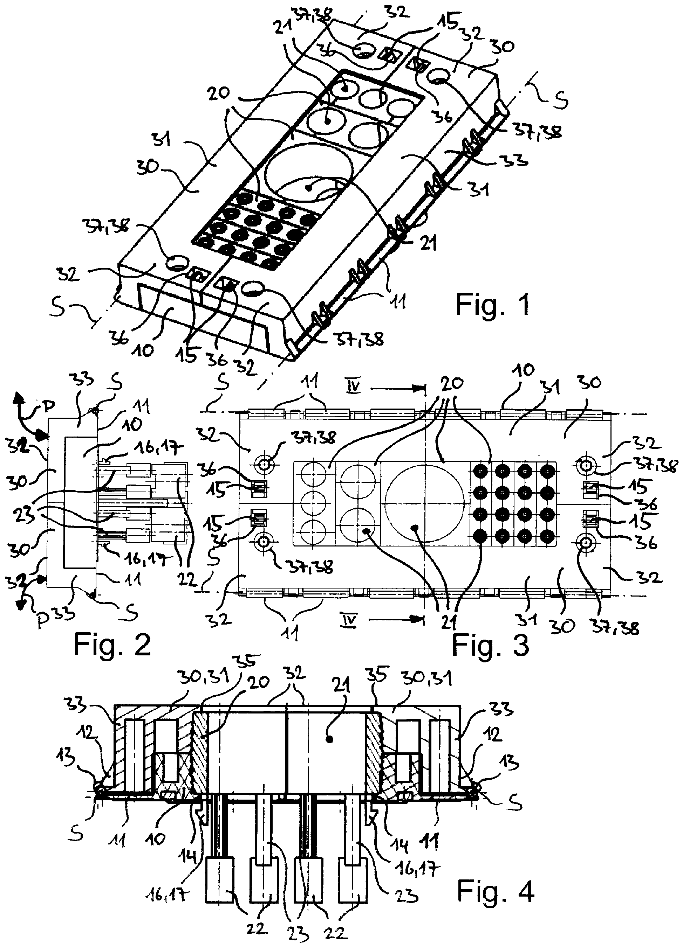

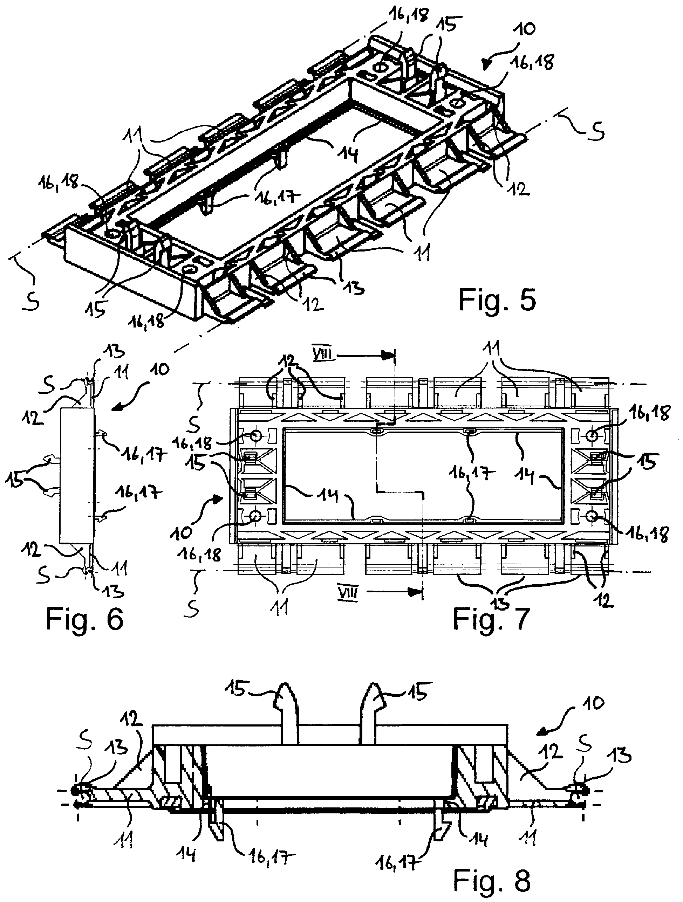

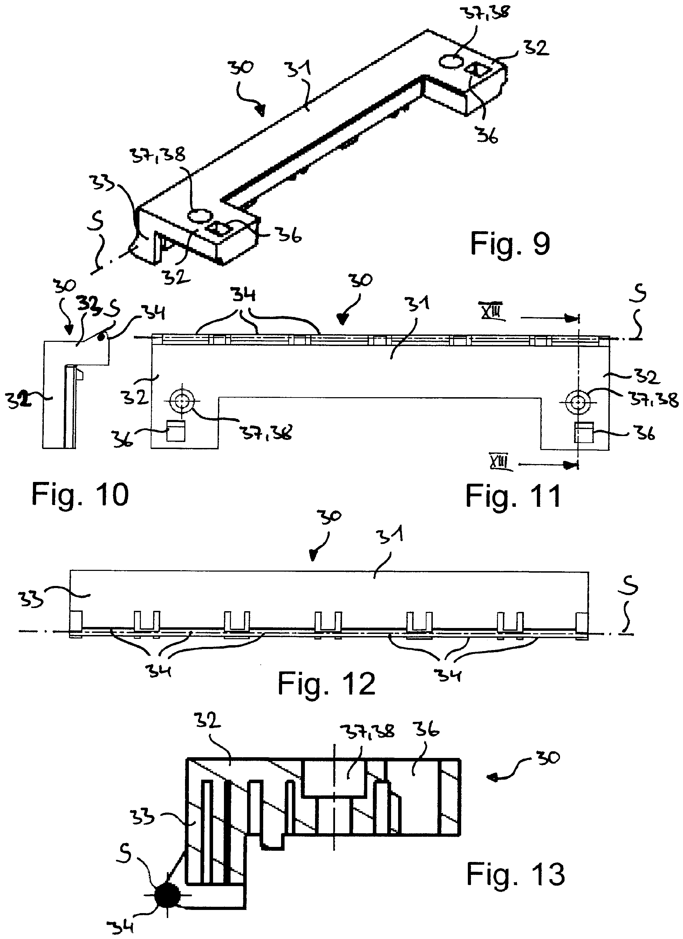

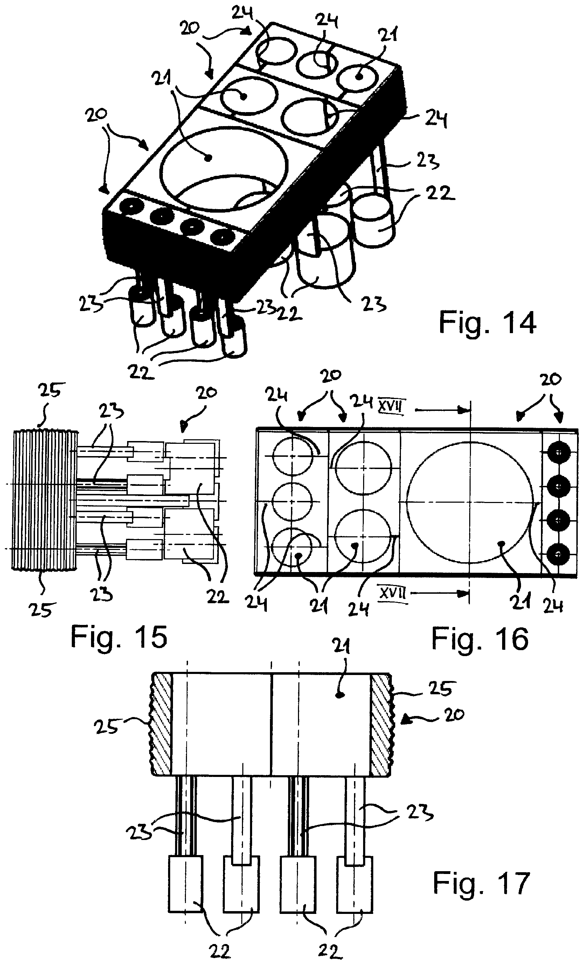

In den Fig. 1 bis 4 ist eine Ausführungsform einer erfindungsgemäßen Leitungsdurchführung schematisch wiedergegeben, wie sie zur Durchführung von Leitungen, wie elektrischen Kabeln, Schläuchen, Fluidleitungen und dergleichen, durch einen nicht zeichnerisch dargestellten Wanddurchbruch eines Gebäudes, eines Schaltschranks oder dergleichen, zu dienen vermag. Die Leitungsdurchführung umfasst einen in den Fig. 5 bis 8 nochmals separat gezeigten Grundrahmen 10, in dessen Innenquerschnitt eine Mehrzahl an Leitungsdurchführungsmodulen 20 aufgenommen ist, deren Außenabmessungen an den Innenquerschnitt des Grundrahmens 10 angepasst sind und welche jeweils - hier mit unterschiedlich großen - Durchgangsöffnungen 21 zur Aufnahme der Leitungen ausgestattet sind. Die Leitungsdurchführungsmodule 20 sind weiter unten unter Bezugnahme auf die Fig. 14 bis 17 im Einzelnen erläutert. Die Leitungsdurchführung umfasst ferner zwei in den Fig. 9 bis 13 nochmals separat gezeigte, an dem Grundrahmen 10 befestigte Halteteile 30, mittels welchen die Leitungsdurchführungsmodule 20 unverlierbar in dem Innenquerschnitt des Grundrahmens 10 festgelegt werden können, indem die Halteteile 30 zwischen einer Halteposition, in welcher sie die Leitungsdurchführungsmodule 20 unverlierbar in dem Grundrahmen 10 festlegen, und einer Freigabeposition, in welcher die Leitungsdurchführungsmodule 20 dem Grundrahmen 10 entnommen und in den Grundrahmen 10 eingeführt werden können, hin und her bewegbar sind.

Wie insbesondere auch den Fig. 5 bis 8 zu entnehmen ist, ist der im vorliegenden Fall einstückig ausgebildete und beispielsweise in Form eines Kunststoff-Spritzgussteils gefertigte Grundrahmen 10 im Wesentlichen rechteckförmig und weist einen vollumfänglich geschlossenen, gleichfalls etwa rechteckförmigen Innenquerschnitt zur Aufnahme der Leitungsdurchführungsmodule 20 auf. Der Grundrahmen 10 umfasst an seinen Längsseiten jeweils eine zur schwenkbaren Anlenkung der Halteteile 30 dienende Schwenkachse S, welche sich parallel zu den Längsseiten des Grundrahmens 10 erstreckt und beispielsweise am freien Ende einer Mehrzahl an sich von einer jeweiligen Längsseite des Grundrahmens 10 nach außen vorstehenden Tragvorsprüngen 11 gebildet sein kann, welche an ihren entgegengesetzten Rändern mit Versteifungsrippen 12 versteift sind (vgl. insbesondere die Fig. 5). Wie am besten aus der Fig. 8 hervorgeht, sind die Schwenkachsen S des Grundrahmens 10 im vorliegenden Fall nach Art von Aufnahmen 13 mit einem C-förmigen Querschnitt gebildet, wobei sich der C-förmige Querschnitt der Aufnahmen 13 um einen Umfangsabschnitt von mehr als 180° erstreckt, um hierzu komplementäre Stababschnitte der Halteteile 30 (vgl. hierzu weiter unten unter Bezugnahme auf die Fig. 9 bis 13) sowohl schwenkbar als auch lösbar, aber gleichwohl unverlierbar an dem Grundrahmen 10 festzulegen. Es versteht sich von selbst, dass stattdessen auch vorgesehen sein kann, dass die Schwenkachsen S des Grundrahmens 10 von Stababschnitten entsprechend jener der Halteteile 30 gebildet sein können, während die Halteteile 30 hierzu komplementäre, etwa C-förmige Aufnahmen entsprechend jener 13 des Grundrahmens 10 besitzen (nicht gezeigt).

Wie des Weiteren insbesondere den Fig. 5 bis 8, aber auch den Fig. 1 bis 4 zu entnehmen ist, weist der Grundrahmen 10 an seinem Innenquerschnitt einen als Widerlager für die Leitungsdurchführungsmodule 20 dienenden, innenseitigen Vorsprung 14 auf, welcher sich im vorliegenden Fall im Wesentlichen vollumfänglich um den Innenumfang des Innenquerschnittes des Grundrahmens 10 erstreckt und im Bereich seiner zur Anlage an einem Wanddurchbruch vorgesehenen, in den Fig. 5 und 8 unteren Seite angeordnet ist, welche einem jeweiligen, in der Halteposition befindlichen Halteteil 30 entgegengesetzt angeordnet ist (vgl. hierzu die Fig. 1 bis 4). Der innenseitige Vorsprung 14 fluchtet dabei im Wesentlichen mit der zur Anlage an einem Wanddurchbruch vorgesehenen Seite des Grundrahmens 10, um im Wesentlichen dessen gesamten Innenquerschnitt zur Aufnahme der Leitungsdurchführungsmodule 20 zugänglich zu machen. Wie insbesondere in der Fig. 4 erkennbar ist, weist der innenseitige Vorsprung 14 des Grundrahmens 10 jedoch nur eine solche Breite auf, dass er den Querschnitt einer jeweiligen Durchgangsöffnung 21 der im Innenquerschnitt des Grundrahmens 10 angeordneten Leitungsdurchführungsmodule 20 im Wesentlichen gänzlich freilässt. An seiner dem innenseitigen Vorsprung 14 abgewandten Seite, also an seiner der zur Anlage an einem Wanddurchbruch vorgesehen Seite entgegengesetzten Seite, weist der Grundrahmen 10 ferner Rastmittel 15 auf, welche zum lösbaren Verrasten von hierzu komplementären Rastmitteln der Halteteile 30 (vgl. hierzu weiter unten unter Bezugnahme auf die Fig. 9 bis 13) in deren Halteposition dienen. Die Rastmittel 15 des Grundrahmens 10 können beispielsweise von Rastzungen gebildet sein, wobei im vorliegenden Fall einem jeweiligen Halteteil 30 jeweils zwei Rastmittel 15 zugeordnet sind.

Der Grundrahmen 10 kann überdies mit Befestigungsmitteln 16 ausgestattet sein, welche zu seiner lösbaren Befestigung im Umfangsbereich eines Wanddurchbruchs dienen. Die Befestigungsmittel 16 umfassen bei dem gezeigten Ausführungsbeispiel einerseits an der zur Anlage an dem Wanddurchbruch vorgesehenen Seite des Grundrahmens 10 angeordnete Rastlaschen 17, andererseits im Bereich der Ecken des Grundrahmens 10 angeordnete Durchgangsbohrungen 18, welche zum Verschrauben des Grundrahmens 10 im Umfangsbereich des Wanddurchbruchs dienen können.

Wie insbesondere den Fig. 9 bis 13, aber auch den Fig. 1 bis 4 zu entnehmen ist, ist ein jedes der beiden identischen Halteteile 30, welche entsprechend dem Grundrahmen 10 beispielsweise in Form von Kunststoff-Spritzgussteilen gefertigt sein können, um die jeweilige Schwenkachse S schwenkbar an den einander entgegengesetzten Längsseiten des Grundrahmens 10 angelenkt, wobei die Halteteile 30 in ihrer in den Fig. 1 bis 4 gezeigten Halteposition einen im Wesentlichen rechteckförmigen Rahmen bilden, welcher parallel zur Erstreckungsebene des Grundrahmens 10 angeordnet ist und an der dem innenseitigen Vorsprung 14 des Grundrahmens 10 entgegengesetzten (in Fig. 1 oberen) Stirnseite des Grundrahmens 10 zur Anlage gelangen. Die beiden Halteteile 39 besitzen im vorliegenden Fall eine etwa C- bzw. U-förmige Gestalt, wobei ein jedes Halteteil 30 einen in der Halteposition parallel zu je einer Längsseite des Grundrahmens 10 angeordneten U-Steg 31 aufweist, an dessen Enden sich senkrecht hierzu jeweils ein in der Halteposition parallel zu je einer Querseite des Grundrahmens 10 angeordneter U-Schenkel 32 erstreckt, wobei die U-Schenkel 32 des Halteteils 30 im vorliegenden Fall gleich lang sind. An den U-Schenkel 31 eines jeden Halteteils 30 schließt sich unter einem etwa rechten Winkel ein Befestigungsabschnitt 33 an, welcher in der Halteposition eine jeweilige, sich in Längsrichtung erstreckende Schmalseite des Grundrahmens 10 überdeckt. An dem dem U-Schenkel 31 abgewandten Ende eines jeden Befestigungsabschnittes 33 ist ein jedes Halteteil 30 mit seiner zur schwenkbaren Anlenkung an dem Grundrahmen 10 dienende Schwenkachse S ausgestattet, welche beispielsweise eine Mehrzahl von Stababschnitten 34 umfasst (vgl. die Fig. 10 bis 13), welche zu den Aufnahmen 13 des Grundrahmens 10 komplementär sind und lösbar in den Aufnahmen 13 verrastbar sind, so dass ein jeweiliges Halteteil 30 sowohl schwenkbar als auch lösbar, aber gleichwohl unverlierbar an dem Grundrahmen 10 festgelegt ist. Ein jedes Halteteil 30 ist auf diese Weise um eine jeweilige Schwenkachse S schwenkbar an dem Grundrahmen 10 angelenkt und zwischen der in Fig. 1 bis 4 gezeigten Halteposition und eine nicht zeichnerisch dargestellten Freigabeposition hin und her klappbar, wie dies durch den Pfeil P der Fig. 2 angedeutet ist.

Wie des Weiteren insbesondere der 4 zu entnehmen ist, erstrecken sich die beiden Halteteile 30 in ihrer Halteposition über zumindest einen äußeren Abschnitt des Innenquerschnittes des Grundrahmens 10 hinweg, wobei sie bei dem gezeigten Ausführungsbeispiel im Wesentlichen um den gesamten Innenumfang des Grundrahmens 10 in Richtung dessen Innenquerschnitt vorstehen, um ein mit dem innenseitigen Vorsprung 14 des Grundrahmens 10 zusammenwirkendes Widerlager für die Leitungsdurchführungsmodule 20 zu bilden, so dass letztere zwischen dem innenseitigen Vorsprung 14 des Grundrahmens und dem den Innenquerschnitt des Grundrahmens 10 nach innen übergreifenden Abschnitt 35 eines jeden Halteteils 30 unverlierbar in dem Innenquerschnitt des Grundrahmens 10 aufgenommen sind, wenn sich die Halteteile 30 in ihrer Halteposition befinden. Wie weiterhin aus der Fig. 4 hervorgeht, erstreckt sich der den Innenquerschnitt des Grundrahmens 10 nach innen übergreifende Abschnitt 35 eines jeden Halteteils 30 - insoweit entsprechend dem innenseitige Vorsprung 14 des Grundrahmens 10 - jedoch nur um ein solches Maß über den Innenquerschnitt des Grundrahmens 10 hinweg, dass er den Querschnitt einer jeweiligen Durchgangsöffnung 21 der im Innenquerschnitt des Grundrahmens 10 angeordneten Leitungsdurchführungsmodule 20 im Wesentlichen gänzlich freilässt. An ihren U-Schenkeln 32 weisen die Halteteile 30 ferner zu den Rastmitteln 15 des Grundrahmens 10 komplementäre Rastmittel 36 auf, welche zum lösbaren Verrasten der Halteteile 30 in deren Halteposition an dem Grundrahmen 10 dienen. Die Rastmittel 36 der Halteteile 30 können beispielsweise von Rastausnehmungen gebildet sein, in welche die Rastzungen des Grundrahmens 10 in lösbaren Eingriff gebracht werden können. Auf diese Weise lässt sich der Grundrahmen 10 in einfacher Weise mit den Leitungsdurchführungsmodulen 20 bestücken, indem die Halteteile 30 aus ihrer in den Fig. 1 bis 5 gezeigten Halteposition in Richtung des Pfeils P gemäß Fig. 2 um die Schwenkachse S in ihre Freigabeposition verschwenkt werden, wonach die Leitungsdurchführungsmodule 20 in den Innenquerschnitt des Grundrahmens 10 hinein geschoben werden können, bis sie an dessen innenseitigem Vorsprung 14 zur Anlage gelangen. Sodann werden die Halteteile 30 wieder um die Schwenkachse S in Richtung des Pfeils P in ihre Halteposition verschwenkt und werden ihre Rastmittel 36 mit jenen 15 des Grundrahmens 10 in lösbaren Eingriff gebracht, so dass die Leitungsdurchführungsmodule 20 unverlierbar in dem Innenquerschnitt des Grundrahmens 10 aufgenommen sind.

Die Halteteile 30 können überdies mit Befestigungsmitteln 37 ausgestattet sein, welche zu ihrer lösbaren Befestigung im Umfangsbereich eines Wanddurchbruchs gemeinsam mit dem Grundrahmen 10 dienen. Die Befestigungsmittel 37 umfassen bei dem gezeigten Ausführungsbeispiel im Bereich der Ecken zwischen dem U-Steg 31 und den U-Schenkeln 32 eines jeweiligen Halteteils angeordnete Durchgangsbohrungen 38, welche mit den Durchgangsbohrungen 18 der Befestigungsmittel 16 des Grundrahmens 10 fluchten, wenn sich die Halteteile 30 in ihrer Halteposition befinden, um den Grundrahmen 10 gemeinsam mit den Halteteilen 30 im Umfangsbereich des Wanddurchbruchs verschrauben zu können.

In den Fig. 14 bis 17 sind die Leitungsdurchführungsmodule 20 der Leitungsdurchführung gemäß Fig. 1 bis 4 schematisch wiedergegeben, wobei im vorliegenden Fall vier verschiedene Leitungsdurchführungsmodule 20 vorgesehen sind, welche jeweils einen etwa rechteckigen Außenquerschnitt besitzen und sich vornehmlich durch den Querschnitt ihrer Durchgangsöffnungen 21 unterscheiden und folglich zur Aufnahme von Leitungen unterschiedlichen Durchmessers dienen. Aus Veranschaulichungsgründen ist in den Fig. 14 bis 17 nur eines der mit vier (kleinen) Durchgangsöffnungen 21 versehenen Leitungsdurchführungsmodule 20 dargestellt, von welchen bei der Leitungsdurchführung gemäß Fig. 1 bis 4 insgesamt vier zum Einsatz gelangen. Die Außenabmessungen eines jeden Leitungsdurchführungsmoduls 20, welche beispielsweise einstückig aus einem elastomeren Kunststoffmaterial, wie Gummi, Silikon oder dergleichen, gefertigt sein können, sind im vorliegenden Fall derart an die Abmessungen des Innenquerschnittes des Grundrahmens 10 angepasst, dass ihre Länge jeweils etwa der Breite des Innenquerschnittes des Grundrahmens 10 entspricht, während ihre Breite jeweils etwa einem Teiler der Länge des Innenquerschnittes des Grundrahmens 10 entspricht. Bei dem gezeigten Ausführungsbeispiel weist das mit den vier kleinsten Durchgangsöffnungen 21 versehene Leitungsdurchführungsmodul 20 beispielsweise eine Breite auf, welche etwa einem Sechzehntel der Länge des Innenquerschnittes des Grundrahmens 10 entspricht, während die mit zwei bzw. drei demgegenüber größeren Durchgangsöffnungen 21 versehenen Leitungsdurchführungsmodule 20 z.B. eine Breite aufweisen, welche jeweils etwa zwei Sechzehntel der Länge des Innenquerschnittes des Grundrahmens 10 entspricht, und das mit nur einer großen Durchgangsöffnung 21 versehene Leitungsdurchführungsmodul 20 z.B. eine Breite aufweist, welche etwa vier Sechzehntel der Länge des Innenquerschnittes des Grundrahmens 10 entspricht (vgl. insbesondere auch die Fig. 1 und 3). Folglich weisen die Leitungsdurchführungsmodule 30 jeweils eine Breite auf, welche etwa einem oder mehreren gleichen Bruchteilen der Länge des Innenquerschnittes des Grundrahmens 10 entspricht, so dass die Leitungsdurchführungsmodule 20 in einfacher Weise gegeneinander ausgetauscht werden können, je nach dem Durchmesser der Leitungen, zu deren Aufnahme die Leitungsdurchführung dienen soll.

Wie sich des Weiteren insbesondere aus den Fig. 14 bis 17 ergibt, sind zumindest einige der Leitungsdurchführungsmodule 20 - im vorliegenden Fall die mit mehreren Durchgangsöffnungen zur Aufnahme von Leitungen versehenen Leitungsdurchführungsmodule 20 - mit einer jeweiligen ihrer Durchgangsöffnungen 21 zugeordneten Verschlussstopfen 22 ausgestattet, deren Außenquerschnitt etwa dem Innenquer) schnitt einer jeweiligen Durchgangsöffnung 21 entspricht und welche zum bedarfsweisen Verschließen von nicht zur Aufnahme einer Leitung benötigten Durchgangsöffnungen 21 dienen. Ein jeder Verschlussstopfen 22 eines jeweiligen Leitungsdurchführungsmoduls 20, welcher vorzugsweise eben) falls aus dem elastomeren Kunststoffmaterial des Leitungsdurchführungsmoduls 20 und insbesondere einstückig mit diesem gefertigt sein kann, ist mittels je eines gleichfalls elastisch nachgiebigen Haltestegs 23 unverlierbar mit dem Leitungsdurchführungsmodul 20 verbunden, so dass der Verschlussstopfen 22 einerseits nicht verlorengehen und der Haltesteg 23 andererseits dazu dienen kann, eine in der jeweiligen Durchgangsöffnung 21 aufgenommene Leitung (nicht gezeigt) zusätzlich, z.B. mittels Kabelbinder oder dergleichen, zu fixieren und dadurch für eine Zugentlastung der Leitung zu sorgen.

Die Leitungsdurchführungsmodule 20 können zweckmäßigerweise in als solcher bekannter Weise mit je einem, eine jeweilige Durchgangsöffnung 21 mit ihrem Außenumfang verbindenden Schlitz 24 versehen sein, um sie manschettenartig um eine zu führende Leitung herumlegen zu können, ohne die gegebenenfalls mit endständigen Anschlüssen, wie Steckern, Buchsen und dergleichen, versehene Leitung durch eine jeweilige Durchgangsöffnung 21 hindurchfädeln zu müssen. Darüber hinaus können die Leitungsdurchführungsmodule 20 umfangsseitig beispielsweise mit einer reibungserhöhenden Oberflächenstruktur 25 ausgestaltet sein, welche im vorliegenden Fall eine Mehrzahl an sich im Umfangsrichtung erstreckender Rippen umfasst und insbesondere auch die Dichtigkeit der in dem Grundrahmen 10 aufgenommenen Leitungsdurchführungsmodule 20 gegen eindringenden Schutz oder Feuchtigkeit zu verbessern vermag (vgl. insbesondere die Fig. 17).

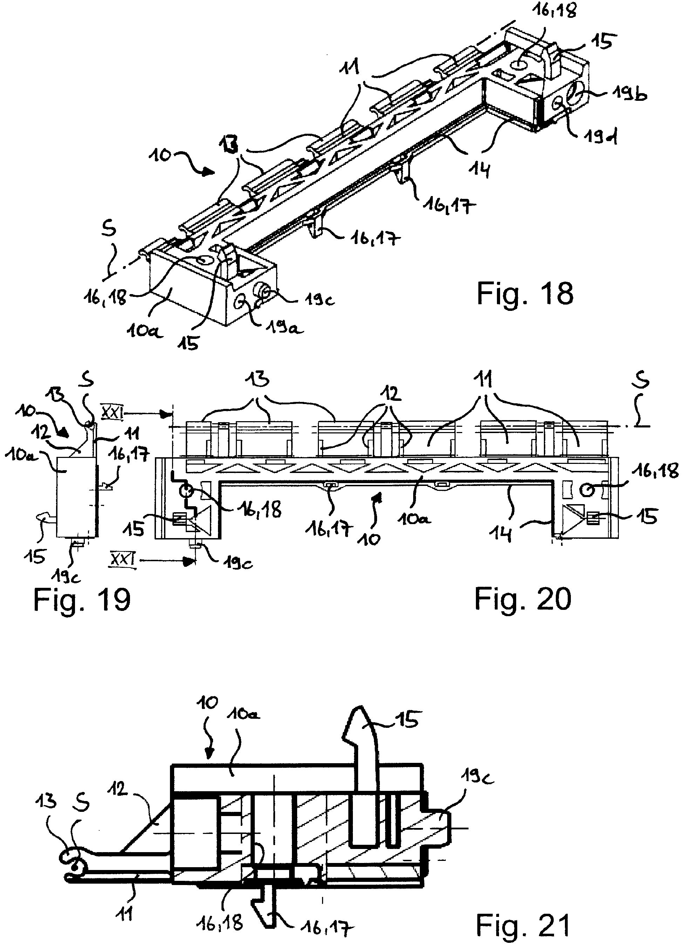

In den Fig. 18 bis 21 ist ein Grundrahmenteil 10a einer gegenüber der Ausführungsform des Grundrahmens gemäß Fig. 1 bis 8 alternativen Ausführungsform eines Grundrahmens 10 schematisch wiedergegeben, welche sich von dem Grundrahmen 10 der Fig. 1 bis 8 vornehmlich dadurch unterscheidet, dass der - nicht in Gesamtheit zeichnerisch dargestellte - Grundrahmen von zwei identischen Grundrahmenteilen 10a gebildet ist, welche lösbar aneinander befestigbar sind. Identische bzw. wirkungsgleiche Komponenten sind mit denselben Bezugszeichen versehen und bedürfen keiner nochmaligen Erörterung.

Wie in den Fig. 18 bis 21 erkennbar, besitzen die beiden Grundrahmenteile 10a im vorliegenden Fall eine etwa C- bzw. U-förmige Gestalt, wobei ein jedes Grundrahmenteil 10a z.B. - insoweit entsprechend der Halteteile 30 (vgl. die Fig. 9 bis 13) - einerseits eine jeweilige Längsseite des Grundrahmens 10, andererseits einen Abschnitt - hier: die Hälfte - einer jeweiligen Querseite des Grundrahmens 10 bildet. Die beiden, wie gesagt identischen, Grundrahmenteile 10a können beispielsweise dadurch unter Bildung eines vollumfänglich geschlossenen Grundrahmens 10 lösbar aneinander festgelegt werden, indem sie über an den einander zugewandten Stirnseiten der Grundrahmenteile 10a vorgesehene Befestigungsbohrungen 19a, 19b miteinander verschraubt werden. In Nähe der Befestigungsbohrungen 19a, 19b sind die einander zugewandten Stirnseiten eines jeweiligen Grundrahmenteils 10a ferner mit zueinander komplementären Zentriermitteln 19c, 19d ausgestattet, wobei im vorliegenden Fall eine der Stirnseiten einen Zentrierzapfen 19c aufweist, während die andere Stirnseite mit einer Zentrieröffnung 19d versehen ist, in welche der Zentrierzapfen 19c des jeweils anderen Grundrahmenteils 10a in Eingriff gebracht werden kann.

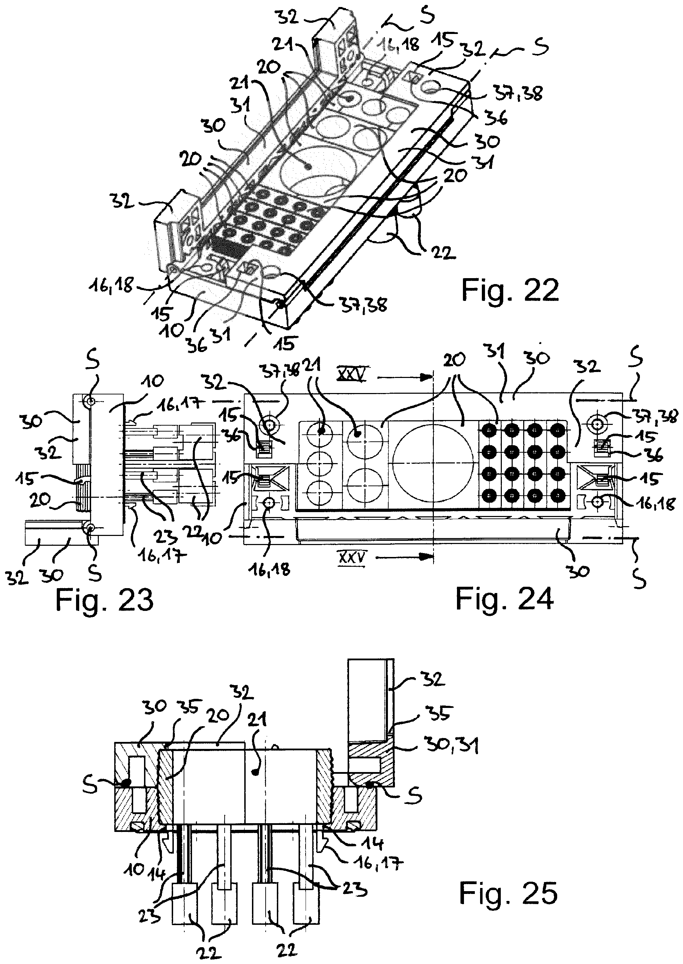

In den Fig. 22 bis 25 ist eine gegenüber der Leitungsdurchführung gemäß den Fig. 1 bis 13 geringfügig abgewandelte Ausführungsform einer Leitungsdurchführung schematisch wiedergegeben, von deren Halteteile 30 sich das eine (in Fig. 22 rechte) in der Halteposition und das andere (in Fig. 22 linke) in der Freigabeposition befindet. Einander entsprechende bzw. wirkungsgleiche Komponenten sind mit denselben Bezugszeichen versehen und bedürfen keiner nochmaligen Erläuterung.

Die in den Fig. 22 bis 25 gezeigte Leitungsdurchführung unterscheidet sich von jener gemäß den Fig. 1 bis 13 vornehmlich dadurch, dass die Schwenkachsen S eines jeweiligen Halteteils 30 an dem den Halteteilen 30 zugewandten, in Fig. 22 oberen Ende des Grundrahmens 10 angeordnet sind, weshalb die Halteteile 30 keinen Befestigungsabschnitt 33 (vgl. insbesondere die Fig. 9 bis 13) aufweisen, sondern direkt an ihrem U-Steg 31 an den parallelen Längsseiten des Grundrahmens 10 angelenkt sind. Auf diese Weise besitzt die Leitungsdurchführung eine noch kompaktere Formgebung und erfordert das Verschwenken der Halteteile 30 zwischen ihrer Halte- und ihrer Freigabeposition einen noch geringeren Bauraum, ohne die Funktionalität der Leitungsdurchführung zu beeinträchtigen.

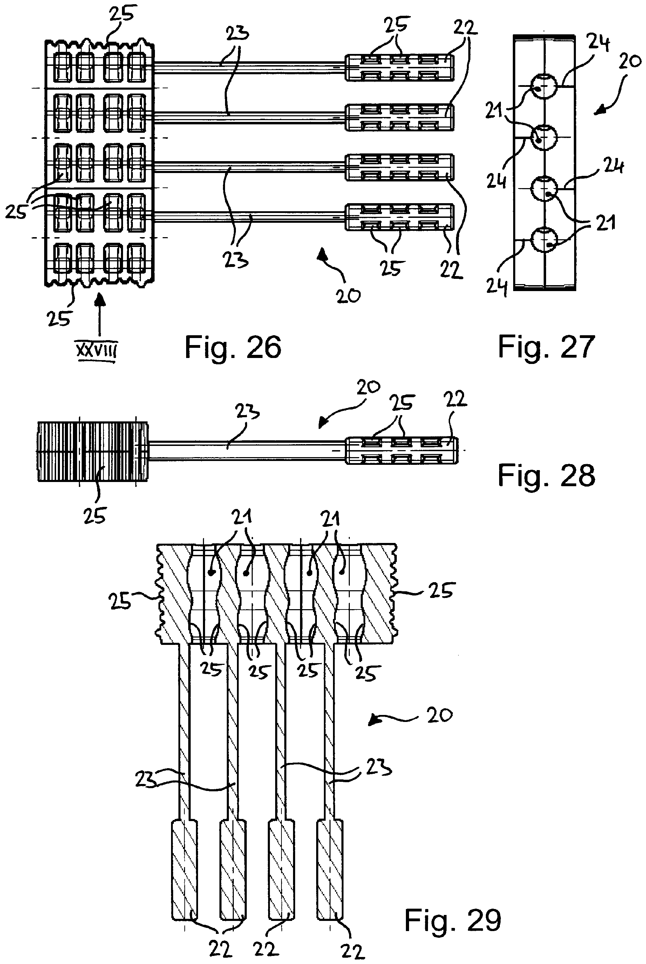

In den Fig. 26 bis 29 ist schließlich eine gegenüber den Leitungsdurchführungsmodulen gemäß den Fig. 14 bis 27 geringfügig abgewandelte Ausführungsform eines Leitungsdurchführungsmodul 20 - hier: mit vier Durchgangsöffnungen 21 - schematisch dargestellt, wobei einander entsprechende bzw. wirkungsgleiche Komponenten wiederum mit denselben Bezugszeichen versehen sind und keiner nochmaligen Erläuterung bedürfen.

Das in den Fig. 26 bis 29 gezeigte Leitungsdurchführungsmodul 20 unterscheidet sich von jenen gemäß den Fig. 14 bis 17 einerseits dadurch, dass seine Durchgangsöffnungen 21 nicht weitgehend (kreis)zylindrisch ausgestaltet sind, sondern an ihrem Innenumfang mit einer sowohl reibungs- als auch dichtungserhöhenden Oberflächenstruktur 25 versehen sind, welche beispielsweise in Axialrichtung alternierend angeordnete, z.B. etwa wellenförmige, Querschnittserweiterungen und -vertiefungen umfasst (vgl. die Fig. 29). Andererseits weist das Leitungsdurchführungsmodul 20 gemäß den Fig. 26 bis 29 die aus einer Mehrzahl an sich im Umfangsrichtung erstreckenden Rippen gebildete Oberflächenstruktur 25 nur an seinen Schmalseiten auf (vgl. insbesondere die Fig. 26, 28, und 29), wobei zumindest eine oder mehrere dieser Rippen weiter vom Außenumfang des Leitungsdurchführungsmoduls 20 vorstehen als die restlichen Rippen, was sich sowohl hinsichtlich einer optimalen Dichtigkeit als auch einer einfachen Montage als vorteilhaft erwiesen hat. An den Längsseiten ist das Leitungsdurchführungsmodul 20 gemäß den Fig. 26 bis 29 mit einer andersartigen Oberflächenstruktur 25 versehen, welche anstelle von Rippen eine Mehrzahl an, z.B. in Reihen und Spalten angeordneten - hier beispielsweise im Wesentlichen rechteckförmigen - Vertiefungen umfasst, was ebenfalls zu einer hohen Dichtigkeit sowie zu einer einfacheren Entformung anlässlich der Herstellung des Kabeldurchführungsmoduls 20 mittels bekannter Kunststoffverarbeitungsverfahren führt. Aus denselben Gründen können auch die Verschlussstopfen 22 mit einer solchen (oder andersartigen) Oberflächenstruktur 25 versehen sein.

## Patentansprüche

1. Leitungsdurchführung mit einem Grundrahmen (10) und mit wenigstens einem, mit einer oder mehreren Durchgangsöffnung(en) (21) für eine jeweilige Leitung versehenen Leitungsdurchführungsmodul (20), dessen Außenabmessungen an den Innenquerschnitt des Grundrahmens (10) angepasst und welches im Innenquerschnitt des Grundrahmens (10) anordbar ist, und mit wenigstens einem, an dem Grundrahmen (10) befestigbaren Halteteil (30), mittels welchem das Leitungsdurchführungsmodul (20) unverlierbar in dem Grundrahmen (10) festlegbar ist, **dadurch gekennzeichnet, dass** das wenigstens eine an dem Grundrahmen (10) befestigte Halteteil (30) zwischen einer Halteposition, in welcher es das Leitungsdurchführungsmodul (20) unverlierbar in dem Grundrahmen (10) festlegt, und wenigstens einer Freigabeposition, in welcher das Leitungsdurchführungsmodul (20) dem Grundrahmen (10) entnehmbar und in den Grundrahmen (10) einführbar ist, hin und her bewegbar ist.

2. Leitungsdurchführung nach Anspruch 1, **dadurch gekennzeichnet, dass** das wenigstens eine Halteteil (30) lösbar, insbesondere rastend, an dem Grundrahmen (10) befestigt ist.

3. Leitungsdurchführung nach Anspruch 1 oder 2, **dadurch gekennzeichnet, dass** an dem Grundrahmen (10) wenigstens zwei, insbesondere genau zwei, Halteteile (30) befestigt sind, welche jeweils zwischen einer Halteposition, in welcher sie das wenigstens eine Leitungsdurchführungsmodul (20) unverlierbar in dem Grundrahmen (10) festlegen, und wenigstens einer Freigabeposition, in welcher das Leitungsdurchführungsmodul (20) dem Grundrahmen (10) entnehmbar und in den Grundrahmen (10) einführbar ist, hin und her bewegbar sind, wobei die Halteteile (30) insbesondere
(a) identisch; und/oder
(b)
- im Wesentlichen C- bzw. U-förmig oder im Wesentlichen L-förmig; oder
- im Wesentlichen kreissektorförmig, insbesondere im Wesentlichen halbkreisförmig,
ausgestaltet sind.

4. Leitungsdurchführung nach einem der Ansprüche 1 bis 3, **dadurch gekennzeichnet, dass** das wenigstens eine Halteteil (30) zwischen der Halteposition und der wenigstens einen Freigabeposition schwenkbar an dem Grundrahmen (10) angelenkt ist, wobei das wenigstens eine Halteteil (30) insbesondere
- um eine sich im Wesentlichen parallel zu einer Seite des Grundrahmens (10) erstreckenden Schwenkachse (S); oder
- um eine sich im Wesentlichen tangential zum Querschnitt des Grundrahmens erstreckende Schwenkachse
schwenkbar ist.

5. Leitungsdurchführung nach Anspruch 4, **dadurch gekennzeichnet, dass** zwei Halteteile (30) um je eine, sich jeweils im Wesentlichen parallel zu einer Seite des Grundrahmens (10) erstreckende Schwenkachse (S) oder um je eine, sich im Wesentlichen tangential zum Querschnitt des Grundrahmens erstreckende Schwenkachse schwenkbar sind, wobei insbesondere
- die Schwenkachsen (S) der beiden Halteteile (30) im Wesentlichen parallel zueinander angeordnet sind;
und/oder
- die beiden Halteteile (30) an einander entgegengesetzten Seiten des Grundrahmens (10) angelenkt sind.

6. Leitungsdurchführung nach einem der Ansprüche 1 bis 5, **dadurch gekennzeichnet, dass** das wenigstens eine Halteteil (30) in seiner Halteposition
- im Wesentlichen parallel zur Erstreckungsebene des Grundrahmens (10) an diesem zur Anlage gelangt;
und/oder
- an dem Grundrahmen (10) verrastbar ist, wobei das wenigstens eine Halteteil (30) insbesondere wenigstens zwei, vorzugsweise genau zwei, Rastmittel (36) aufweist, welche mit hierzu komplementären Rastmitteln (15) des Grundrahmens (10) in Eingriff bringbar sind.

7. Leitungsdurchführung nach einem der Ansprüche 1 bis 6, **dadurch gekennzeichnet, dass** der Grundrahmen (10) einen als Widerlager für das wenigstens eine Leitungsdurchführungsmodul (20) dienenden, innenseitigen Vorsprung (14) aufweist, welcher sich zumindest um einen Teil seines Innenumfangs, insbesondere im Wesentlichen um seinen gesamten Innenumfang, erstreckt, wobei der innenseitige Vorsprung (14) des Grundrahmens (10) insbesondere
- im Bereich seiner dem wenigstens einen, in der Halteposition befindlichen Halteteil (30) entgegenbesetzten Seite angeordnet ist; und/oder
- eine solche Breite aufweist, dass er den Querschnitt der Durchgangsöffnung(en) (21) des wenigstens einen in dem Grundrahmen (10) angeordneten Leitungsdurchführungsmoduls (20) freilässt.

8. Leitungsdurchführung nach einem der Ansprüche 1 bis 7, **dadurch gekennzeichnet, dass** das wenigstens eine Halteteil (30) in der Halteposition über zumindest einen Teil des Innenumfangs des Grundrahmens (10) in Richtung dessen Innenquerschnittes vorsteht, um ein Widerlager für das wenigstens eine Leitungsdurchführungsmodul (20) zu bilden, wobei das wenigstens eine Halteteil (30) insbesondere in der Halteposition um ein solches Maß in Richtung des Innenquerschnittes des Grundrahmens (10) vorsteht, dass es den Querschnitt der Durchgangsöffnung(en) (21) des wenigstens einen in dem Grundrahmen (10) angeordneten Leitungsdurchführungsmoduls (20) freilässt.

9. Leitungsdurchführung nach einem der Ansprüche 1 bis 8, **dadurch gekennzeichnet, dass** der Grundrahmen (10) einstückig ausgebildet ist.

10. Leitungsdurchführung nach einem der Ansprüche 1 bis 8, **dadurch gekennzeichnet, dass** der Grundrahmen (10) mehrteilig, insbesondere zweiteilig, ausgebildet ist, wobei die Grundrahmenteile (10a) unter Bildung des Grundrahmens (10) aneinander befestigbar sind, wobei die Grundrahmenteile (10a) insbesondere
(a) identisch sind; und/oder
(b) lösbar aneinander befestigbar insbesondere miteinander verschraubbar, sind; und/oder
(c) zueinander komplementäre Zentriermittel (19c, 19d) aufweisen; und/oder
(d)
- im Wesentlichen C- bzw. U-förmig oder L-förmig ausgestaltet sind, um einen im Wesentlichen rechteckigen Grundrahmen (10) zu bilden; oder
- im Wesentlichen kreisbogenförmig, insbesondere im Wesentlichen halbkreisförmig, ausgestaltet sind, um einen runden Grundrahmen zu bilden.

11. Leitungsdurchführung nach einem der Ansprüche 1 bis 10, **dadurch gekennzeichnet, dass** der Grundrahmen (10) und/oder das wenigstens eine Halteteil (30) ferner Befestigungsmittel (16, 37) zur, insbesondere lösbaren, Befestigung der Leitungsdurchführung an einem Wanddurchbruch aufweist bzw. aufweisen, wobei die Befestigungsmittel (16, 37) insbesondere Durchgangsbohrungen (18, 38) umfassen.

12. Leitungsdurchführung nach einem der Ansprüche 1 bis 11, **dadurch gekennzeichnet, dass** wenigstens ein Leitungsdurchführungsmodul (20) wenigstens einen, wenigstens einer Durchgangsöffnung (21) desselben zugeordneten Verschlussstopfen (22) aufweist, welcher lösbar in der Durchgangsöffnung (21) anordbar ist, wobei der Verschlussstopfen (22) mittels eines elastisch nachgiebigen Haltestegs (23) mit dem Leitungsdurchführungsmodul (20) verbunden ist, wobei insbesondere
- der Verschlussstopfen (22) und der Haltesteg (23) einstückig mit dem Leitungsdurchführungsmodul (20) ausgebildet sind; und/oder
- das Leitungsdurchführungsmodul (20), der Verschlussstopfen (22) und der Haltesteg (23) aus einem Elastomermaterial gefertigt sind; und/oder
- das Leitungsdurchführungsmodul (20) außenumfangsseitig und/oder innenumfangsseitig an der bzw. den Durchgangsöffnung(en) (21) mit einer reibungserhöhenden Oberflächenstruktur (25) ausgestaltet ist.

13. Leitungsdurchführung nach einem der Ansprüche 1 bis 12, **dadurch gekennzeichnet, dass** eine Mehrzahl an Leitungsdurchführungsmodulen (20), insbesondere mit Durchgangsöffnungen (21) mit verschiedenen Querschnitten, vorgesehen ist, welche gemeinsam in dem Innenquerschnitt des Grundrahmens (10) anordbar sind.

14. Leitungsdurchführungsmodul (20) mit einer oder mehreren Durchgangsöffnung(en) (21) für eine jeweilige Leitung, welches zur Anordnung in einem Grundrahmen (10) einer Leitungsdurchführung, insbesondere nach einem der vorangehenden Ansprüche, geeignet ist, **dadurch gekennzeichnet, dass** das Leitungsdurchführungsmodul (20) wenigstens einen, wenigstens einer Durchgangsöffnung (21) desselben zugeordneten Verschlussstopfen (22) aufweist, welcher lösbar in der Durchgangsöffnung (21) anordbar ist, wobei der Verschlussstopfen (22) mittels eines elastisch nachgiebigen Haltestegs (23) mit dem Leitungsdurchführungsmodul (20) verbunden ist.

15. Leitungsdurchführungsmodul nach Anspruch 14, **dadurch gekennzeichnet, dass**
- der Verschlussstopfen (22) und der Haltesteg (23) einstückig mit dem Leitungsdurchführungsmodul (20) ausgebildet sind; und/oder
- das Leitungsdurchführungsmodul (20), der Verschlussstopfen (22) und der Haltesteg (23) aus einem Elastomermaterial gefertigt sind; und/oder
- das Leitungsdurchführungsmodul (20) außenumfangsseitig und/oder innenumfangsseitig an der bzw. den Durchgangsöffnung(en) (21) mit einer reibungserhöhenden Oberflächenstruktur (25) ausgestaltet ist.
